# EUROPEAN PATENT APPLICATION

(11) **EP 4 799 482 A1**
(43) Date of publication of application: **02.09.2026**
(21) Application number: 25160659.6
(22) Date of filing: 27.02.2025
(51) Int. Cl.: A01N 43/54, A01P 13/00

(54) **METHOD FOR CONTROLLING WEEDS IN A CULTIVATION AREA OF FIELD CORN**

(71) Applicant: BASF Agricultural Solutions Deutschland GmbH, 67117 Limburgerhof (DE)
(72) Inventor: PARRA RAPADO, Liliana, 67117 Limburgerhof (DE); ASHER, Brady Scott, Durham, North Carolina 27709 (US); SEISER, Tobias, 67056 Ludwigshafen am Rhein (DE); ZEYER, Silke, 67117 Limburgerhof (DE)
(74) Representative: AP-IP

(57) **Abstract**

The present invention relates to a method for controlling weeds in a cultivation area of field corn which comprises applying an effective amount of herbicide A to a cultivation area of field corn.

## Description

The present invention relates to a method for controlling weeds in a cultivation area of field corn which comprises applying an effective amount of herbicide A.

Corn, also known as maize or Zea mays, is a cereal grain first domesticated by indigenous peoples in southern Mexico about 10,000 years ago. It has since evolved into a staple crop cultivated worldwide. Various types of corn, such as field corn (i.e. dent corn, Zea mays subsp. indentata), sweet corn (Zea mays subsp. saccharata), popcorn (Zea mays subsp. everta), waxy corn (Zea mays var. ceratina) and pod corn (Zea mays subsp. tunicata) are known.

Field corn is grown specifically for grain production, which is used primarily for animal feed, industrial products, and as a key ingredient in processed foods. It plays a crucial role in the global agricultural economy, serving as a primary source of calories for livestock and as a significant component in the production of biofuels, particularly ethanol. Accordingly, field corn is a very important crop in modern farming.

Herbicide A (2-[2-[[3-chloro-6-[3,6-dihydro-3-methyl-2,6-dioxo-4-(trifluoromethyl)-1(2H)-pyrimidinyl]-5-fluoro-2-pyridi-nyl]-oxy]phenoxy]-acetic acid ethyl ester; CAS 158274-50-9), mixtures thereof and the use to control unwanted plants has been described in WO 2017/202768.

One concern of farmers is the presence of unwanted plants in the area were crop plants are grown or are to be grown. The crop plants must compete with the weeds on resources like space, water, sunlight or nutrients, which leads e.g. to decreased crop yield.

In crop protection, it is desirable in principle to increase the specific activity of an active compound and the reliability of the effect. It is particularly desirable to control weeds (i.e. unwanted plants) effectively, but at the same time to be compatible with the useful plants in question. Also desirable is a broad spectrum of activity allowing the simultaneous control of unwanted plants.

Herbicides potentially causing harm to crops is a significant concern in agricultural practices. Herbicides are chemicals used to control unwanted plants, but their application can have unintended consequences (e.g. damages) on the crops they are meant to protect.

Therefore, there is a need for highly effective weed control without harming the respective crops.

It is an object of the present invention to provide a method for controlling weeds in a cultivation area of field corn which comprises applying an effective amount of herbicide A to a cultivation area of field corn.

This and further objects are achieved by the herbicidal compositions below.

Surprisingly, it was found that the application of herbicide A has no adverse effect on field corn, i.e., it has been found that the application of herbicide A results in no negative effects on field corn while maintaining very good herbicidal efficacy on weeds.

Furthermore, it was surprisingly found that herbicide A, in particular when applied pre-plant, exhibits selectivity towards field corn.

Accordingly, the present invention relates to a method for controlling weeds in a cultivation area of field corn, which comprises applying ethyl 2-[2-[[3-chloro-5-fluoro-6-[3-methyl-2,6-dioxo-4-(trifluoromethyl)pyrimidin-1-yl]- 2-pyridyl]oxy]phenoxy]acetate (herbicide A) in a cultivation area of field corn.

The invention also relates to a method for controlling weeds in a cultivation area of field corn, which comprises applying a composition comprising herbicide A (component A) and optionally at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters.

The invention relates also to compositions in the form of herbicidal active agrochemical compositions comprising a composition comprising herbicide A and optionally at least one herbicide B as defined herein, and also at least one liquid and/or solid carrier and/or one or more surfactants and, if desired, one or more further auxiliaries customary for agrochemical compositions.

Further embodiments of the present invention are evident from the claims, the description, and the examples. It is to be understood that the features mentioned above and still to be illustrated below of the subject matter of the invention can be applied not only in the combination given in each case but also in other combinations, without leaving the scope of the invention.

The preferred embodiments of the invention mentioned herein below should be understood as being preferred either independently from each other or in combination with one another.

As used herein, the term "a cultivation area of field corn" includes the area where field corn is growing, will grow, is planted or will be planted.

The method of the invention comprises the application of an herbicidal effective amount of herbicide A and optionally at least one herbicide B. The term "effective amount" denotes an amount of the active ingredients, which is sufficient for controlling unwanted plants.

As used herein, the terms "control" and "controlling" refers to inhibition of growth, control of growth, reduction of growth or complete destruction of weeds.

As used herein, the terms "weeds", "undesired vegetation" and "unwanted plants" are synonyms and comprise also volunteer crop plants selected from soy and cotton.

Volunteer crop plants are crop plants that volunteer in planted crops. They are considered to be "undesired" or "unwanted", as they compete with the planted crop for space, moisture, nutrients, and light.

As used herein, "burndown" refers to the use of an herbicide to reduce weed presence at the time of treatment. Burndown is often used in minimum or no-till fields because the weeds cannot be managed by tilling the soil. The burndown application may be used post-harvest and/or prior to crop emergence. Burndown is especially useful against weeds that emerge between growing seasons.

As used herein, the term "composition" relates both to a physical admixture containing herbicide A and at least one herbicide B as active ingredients, and also to the combined application of herbicide A and at least one herbicide B, which means that herbicide A, and at least one herbicide B, are used together for weed control in a cultivation area of field corn.

When using the method of the invention in a combined application of herbicide A and at least one herbicide B, herbicide A and herbicide B, can be applied simultaneously or in succession to the cultivation area of field corn.

Preferably, the term "composition" is understood as a physical admixture of herbicide A, and at least one herbicide B.

As used herein, the term "agrochemical composition" refers to a composition comprising herbicide A and optionally at least one herbicide B, and one or more formulation auxiliaries customary for crop protection compositions.

The term " agrochemical composition" includes formulations containing a physical admixture of herbicide A and optionally at least one herbicide B, (combo-formulation), as well as kits-of-parts formulations, where herbicide A and at least one herbicide B are formulated separately, i.e. as solo formulations, and ready to use formulations, such as an aqueous spray liquor, obtained by tank mixing solo- or combo-formulations of the herbicide A and optionally at least one herbicide B. The agrochemical compositions generally contain at least one formulation auxiliary, such as one or more surfactants, and at least one liquid or solid carrier.

In the present method, variations within field corn are not particularly limited if the field corn is a variety which is usually cultivated. For examples, field corn which belongs to diverse maturity groups from early maturing to late maturing can be used.

Also, the variations are not limited by diverse intended usages of the harvest of field com. For example, field corn for any of the intended usages such as seed production, ornamentals, green manures, silage, grains, and the like can be used. For grains, field com for any of the intended usages such as starch, ethanol, oil extraction, feed, sugar production, and the like can be used. Although the weight of seeds of field corn which can be used in the present method is not particularly limited, a seed weight of field com is usually within a range of 100 to 400 mg/seed, and more preferably 200 to 300 mg/seed.

Examples of field corn varieties include Pioneer Dent Series (for example, Pioneer 2088), Dekalb Corn Series (for example, DKC5632), MAS40F and Koshu.

The field corn may be the one producible by natural crossing, plants producible by a mutation, F1 hybrid plants, or transgenic plants (also called genetically modified plants). These plants generally have characteristics such as tolerance to herbicides, accumulation of substances harmful to insect pests, reduction in sensitivity to diseases, increase in yield potential, improvement in resistance to biotic or abiotic stress factors, accumulation of substances, and improvement in preservability and processability.

The F1 hybrid plants are those which are each a first filial hybrid obtained by crossing two different varieties with each other and usually have characteristics of heterosis, which is a nature of having more excellent trait than both parents. The transgenic plants are those which are obtained by introducing an exogeneous gene from other organisms such as microorganisms and have characteristics like those that cannot be easily obtained by crossbreeding, mutation induction, or natural recombination in natural environments.

Examples of the technologies used to create the above plants include conventional type variety improvement technologies; genetic recombination technologies; genome breeding technologies; new breeding technologies; and genome editing technologies. The conventional technologies for type variety improvement are specifically technologies for obtaining plants having desired properties by a mutation and crossing. The genetic recombination technologies are technologies in which a target gene (DNA) is extracted from a certain organism (for example, microorganism) to introduce it into a genome of a different target organism, thereby imparting new properties to the organism, and antisense technologies or RNA interference technologies for imparting new or improved characteristics by silencing certain genes existing in plants. The genome breeding technologies are those improving breeding efficiency by using genome in- formation and include DNA marker (also called genome markers or genetical markers) breeding technologies and genomic selection. For example, the DNA marker breeding is a method in which a progeny having a target gene with a useful trait is selected from a lot of cross progenies by using a DNA marker which is a DNA sequence and is a marker of the presence position of a gene with a specific useful trait on a genome. This method has the characteristics that the time required for breeding can be efficiently reduced by analyzing the cross progeny using a DNA marker when the progeny is a juvenile plant.

Also, the genomic selection is a technique in which a prediction formula is created from a phenotype obtained in advance and genome information to predict the characteristics from the prediction formula and the genome information without any evaluation of the phenotype and is technologies contributing to improvement in efficient breeding. The new breeding techniques are a generic term of variety improvement (= breeding) techniques that are combinations of molecular biological techniques. Examples of the new breeding techniques include cisgenesis/intragenesis, introduction of an oligonucleotide-directed mutation, RNA-dependent DNA methylation, grafting onto a GM rootstock or scion, reverse breeding, agroinfiltration, and seed production technology (SPT). The genome editing technologies are those in which genetic information is transformed in a sequence-specific manner which enables, for example, deletion of a base sequence, substitution of an amino acid sequence, and introduction of an exogenous gene. Examples of tools for these techniques include sequence-specific genome modification techniques such as zinc-finger nuclease (ZFN), TALEN, CRISPR/Cas9, CRISPER/Cpfl, and Meganuclease which each enable sequence-specific DNA scission and CAS9 Nickase and Target- AID which are each created by modifying the aforementioned tools.

Examples of the plants mentioned above include plants listed in GM APPROV AL DATABASE of genetically modified crops in the electronic information site (http://www.isaaa.org/) of INTERNATIONAL SERVICE for the ACQUISITION of AGRI-BIOTECH APPLICATIONS (ISAAA). More specifically, these examples include herbicide tolerant plants, insect pest resistant plants, disease resistant plants, and quality modified (for example, increase or decrease in content of a certain component or change in composition) plants of products (for example, starch, amino acid, and fatty acid), fertile trait modified plants, abiotic stress tolerant plants, or plants modified in traits relating to growth and yield.

Tolerance to herbicides is obtained, for example, by reducing the compatibility of a chemical with its target, by rapid metabolism (for example, breakdown or modification) resulting from the expression of a chemical deactivation enzyme, or by inhibiting the incorporation of a chemical into a plant body or the transfer of the chemical in the plant body.

The plants to which herbicide tolerance is imparted by genetic recombination technologies include plants to which tolerances to the following inhibitors are imparted by genetic recombination technologies:
4-hydroxyphenyl pyruvate dioxygenase (i.e. HPPD) inhibitors such as isoxaflutole and mesotrione,
acetolactate synthetase (i.e. ALS) inhibitors such as imidazolinone type herbicides including imazethapyr and sulfonylurea type herbicides including thifensulfuron-methyl,
5-enolpyruvylshikimate-3-phosphate synthase (i.e. EPSP) inhibitors such as glyphosate, glutamine synthetase inhibitors such as glufosinate,
auxin type herbicides such as 2,4-D and dicamba, and
oxynil type herbicides including bromoxynil.

In the present method, "a cultivation area of field corn" includes the area where field corn is growing, will grow, is planted or will be planted.

The cultivation of field corn in the present invention can be managed according to the plant-nutrition in the common crop cultivation. The fertilization system may be based on Precision Agriculture adopting variable rate application or may be conventionally uniform one. In addition, nitrogen fixation bacteria and mycorrhizal fungi may be inoculated by seed treatment.

The herbicide A is known in the art and are described in more detail e.g. in WO 2017/202768.

Herbicide A as described might have different forms, e.g. a specific crystalline form, accordingly the herbicide A as described herein also includes such different forms.

For example, the herbicide A might be present in its crystalline form as disclosed in WO 17/202768.

In the present method, the required application rate of the herbicide A without formulation auxiliaries, depends on the kind of effect desired, the density of the undesired vegetation, on the development stage of the unwanted plants, on the climatic conditions of the location where the composition is used, and on the application method.

In the present method, the application rate of herbicide A is
preferably 5 to 100 g/ha,
more preferably 10 to 50 g/ha, and
still more preferably 25 g/ha of the cultivation area.

Examples of the specific application rates of herbicide A include
6 g/ha, 7 g/ha, 8 g/ha, 9 g/ha, 12 g/ha, 15 g/ha, 18 g/ha, 20 g/ha, 25 g/ha, 30 g/ha, 40 g/ha, 60 g/ha and 80 g/ha of the cultivation area.

These application rates can be described with "approximately."

"Approximately" means plus/minus 10%, e.g. "approximately 10 g/ha" means "9 to 11 g/ha."

In general, the application rate of herbicide A, is
from 5 to 100 g/ha,
preferably from 9 to 75 g/ha,
more preferably from 12.5 to 50 g/ha,
of active substance.

In another embodiment of the invention, the application rate of herbicide A is
from 12.5 to 50 g/ha,
preferably from 25 to 50 g/ha;
also preferably 25 g/ha or 50 g/ha.

In another embodiment of the invention, the application rate of herbicide A is
from 100 to 5 g/ha,
preferably from 75 to 6 g/ha,
more preferably from 50 to 9 g/ha,
especially preferably from 37.5 to 12.5 g/ha;
of active substance.

In another embodiment of the invention, the application rate of the herbicide A is
from 25 to 5 g/ha,
preferably from 25 to 12.5 g/ha,
of active substance.

In another embodiment of the invention, the application rate of the herbicide A is
from 50 to 25 g/ha,
preferably from 37.5 to 25 g/ha,
of active substance.

In another embodiment of the invention, the application rate of the herbicide A is
from 50 to 25 g/ha,
preferably from 50 to 37.5 g/ha,
of active substance.

In another embodiment of the invention, the application rate of herbicide A is
from 5 to 100 g/ha,
preferably from 9 to 50 g/ha,
more preferably from 12.5 to 50 g/ha,
of active substance.

In another embodiment of the invention, the application rate of herbicide A is
from 10 to 50 g/ha,
preferably from 12 to 30 g/ha;
also preferably 12.5 g/ha, 20 g/ha, 25 g/ha or 30 g/ha.

In another embodiment of the invention, the application rate of the herbicide A is
from 45 to 27.5 g/ha,
preferably from 40 to 30 g/ha,
of active substance.

In another embodiment of the invention, the application rate of the herbicide A is
from 22.5 to 6 g/ha,
preferably from 20 to 12.5 g/ha,
of active substance.

In another embodiment of the invention, the application rate of the herbicide A is about 50 g/ha, preferably is 50 g/ha.

In another embodiment of the invention, the application rate of the herbicide A is about 45 g/ha, preferably is 45 g/ha.

In another embodiment of the invention, the application rate of the herbicide A is about 40 g/ha, preferably is 40 g/ha.

In another embodiment of the invention, the application rate of the herbicide A is about 37.5 g/ha, preferably is 37.5 g/ha.

In another embodiment of the invention, the application rate of the herbicide A is about 34 g/ha, preferably is 34 g/ha.

In another embodiment of the invention, the application rate of the herbicide A is about 30 g/ha, preferably is 30 g/ha.

In another embodiment of the invention, the application rate of the herbicide A is about 27.5 g/ha, preferably is 27.5 g/ha.

In another embodiment of the invention, the application rate of the herbicide A is about 25 g/ha, preferably is 25 g/ha.

In another embodiment of the invention, the application rate of the herbicide A is about 22.5 g/ha, preferably is 22.5 g/ha.

In another embodiment of the invention, the application rate of the herbicide A is about 20 g/ha, preferably is 20 g/ha.

In another embodiment of the invention, the application rate of the herbicide A is about 18 g/ha, preferably is 18 g/ha.

In another embodiment of the invention, the application rate of the herbicide A is about 16 g/ha, preferably is 16 g/ha.

In another embodiment of the invention, the application rate of the herbicide A is about 14 g/ha, preferably is 14 g/ha.

In another embodiment of the invention, the application rate of the herbicide A is about 12.5 g/ha, preferably is 12.5 g/ha.

In another embodiment of the invention, the application rate of the herbicide A is about 10 g/ha, preferably is 10 g/ha.

In another embodiment of the invention, the application rate of the herbicide A is about 9 g/ha, preferably is 9 g/ha.

In another embodiment of the invention, the application rate of the herbicide A is about 8 g/ha, preferably is 8 g/ha.

In another embodiment of the invention, the application rate of the herbicide A is about 6 g/ha, preferably is 6 g/ha.

"About" as used herein includes a range of the specified amount, wherein the specified amount is increased or decreased by 10%. For example, "about 20 g/ha" includes a range of 22 g/ha to 18 g/ha.

In another embodiment of the invention, the application rate [g/ha] of the herbicide A is 10, 10.25, 10.5, 10.75, 11, 11.25, 11.5, 11.75, 12, 12.25, 12.5, 12.75, 13, 13.25, 13.5, 13.75, 14, 14.25, 14.5, 14.75, 15, 15.25, 15.5, 15.75, 16, 16.25, 16.5, 16.75, 17, 17.25, 17.5, 17.75, 18, 18.25, 18.5, 18.75, 19, 19.25, 19.5, 19.75, 20, 20.25, 20.5, 20.75, 21, 21.25, 21.5, 21.75, 22, 22.25, 22.5, 22.75, 23, 23.25, 23.5, 23.75, 24, 24.25, 24.5, 24.75, 25, 25.25, 25.5, 25.75, 26, 26.25, 26.5, 26.75, 27, 27.25, 27.5, 27.75, 28, 28.25, 28.5, 28.75, 29, 29.25, 29.5, 29.75, 30, 30.25, 30.5, 30.75, 31, 31.25, 31.5, 31.75, 32, 32.25, 32.5, 32.75, 33, 33.25, 33.5, 33.75, 34, 34.25, 34.5, 34.75, 35, 35.25, 35.5, 35.75, 36, 36.25, 36.5, 36.75, 37, 37.25, 37.5, 37.75, 38, 38.25, 38.5, 38.75, 39, 39.25, 39.5, 39.75, 40, 40.25, 40.5, 40.75, 41, 41.25, 41.5, 41.75, 42, 42.25, 42.5, 42.75, 43, 43.25, 43.5, 43.75, 44, 44.25, 44.5, 44.75, 45, 45.25, 45.5, 45.75, 46, 46.25, 46.5, 46.75, 47, 47.25, 47.5, 47.75, 48, 48.25, 48.5, 48.75, 49, 49.25, 49.5, 49.75, or 50 g/ha.

In the present method, herbicide A may be used in combination with at least one herbicide B. For here, using in combination includes tank-mix, pre-mix, and sequential treatment.

In the case of sequential treatment, the order of treatments is not particularly limited.

Accordingly, the present method optionally comprises the application of a second herbicide B (component B) selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters, in a cultivation area of field corn.

Surprisingly, it was also found that a composition comprising herbicide A and at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters, has no adverse effect on field corn, i.e., it has been found that the application of herbicide A at least one herbicide B results in no negative effects on field corn while maintaining very good herbicidal efficacy on weeds.

Furthermore, it was surprisingly found that a composition comprising herbicide A and at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters, in particular when applied pre-plant, exhibits selectivity towards field corn.

Accordingly, the present invention also relates to a method for controlling weeds in a cultivation area of field corn, which comprises applying a composition comprising
A) herbicide A, which is ethyl 2-[2-[[3-chloro-5-fluoro-6-[3-methyl-2,6-dioxo-4-(trifluoromethyl)pyrimidin-1-yl]- 2-pyridyl]oxy]phenoxy]acetate, and
B) optionally at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters,
in a cultivation area of field corn.

In another embodiment the present invention also relates to a method for controlling weeds in a cultivation area of field corn, which comprises applying a composition comprising
A) herbicide A, which is ethyl 2-[2-[[3-chloro-5-fluoro-6-[3-methyl-2,6-dioxo-4-(trifluoromethyl)pyrimidin-1-yl]- 2-pyridyl]oxy]phenoxy]acetate, and
B) at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid including their agriculturally acceptable salts and esters
in a cultivation area of field corn.

The herbicides B, i.e. saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid (CAS 937600-24-3) including their agriculturally acceptable salts and esters are well known in the art and described in more detail e.g. in "The compendium of Pesticide common Names", http://www.alanwood.net/pesticides/.

If the herbicides B might have different forms, such as crystalline or particle forms, the herbicides C as described herein also include such different forms.

For example, saflufenacil might be present in its crystalline form as disclosed in WO 08/43835 or WO 08/43836.

For example, trifludimoxazin might be present in its crystalline form as disclosed in WO 2013/174693, or in form of particles as disclosed in WO 2015/071087.

For example, glufosinate might be present in different crystalline forms as disclosed in WO 2019/018406 and WO 2020/214631.

For example, pyroxasulfone might be present in its crystalline form as disclosed in WO 2021/002484 and WO 2022/158500.

For example, mesotrione might be present in its crystalline form(s) as disclosed in WO 2006/021743 and WO 2011/016018.

For example, topramezone might be present in its crystalline form as disclosed in WO 2009/007328, WO 2022/170964 or US 2023/0348446.

For example, isoxaflutole might be present in its crystalline form as disclosed in Acta Cryst. (2022), E78, 979-983.

If the herbicides B as described herein can form geometrical isomers, for example E/Z isomers, it is possible to use both, the pure isomers and mixtures thereof, in the methods and compositions according to the invention.

If the herbicides B as described herein have one or more centres of chirality and, consequently, are present as enantiomers or diastereomers, it is possible to use both, the pure enantiomers and diastereomers and their mixtures, in the methods and compositions according to the invention.

For example, the term "glufosinate" as used herein includes glufosinate as an acid form, as D-type or L-type optical isomer, as mixture of two optical isomers at any ratio (including the racemic form which is a 50:50 mixture), and the respective agronomically acceptable salts. Usually "glufosinate" means the racemic form, and the agronomically acceptable salts of the aforementioned forms.

In a preferred embodiment of the invention, glufosinate is the L-type optical isomer, i.e. L-glufosinate, which is also named glufosinate-P.

For example, the term "dimethenamid" as used herein includes dimethenamid as pure R-type or pure S-type optical isomer and as mixture of two optical isomers at any ratio (including the racemic form which is a 50:50 mixture). Usually "dimethenamid" means the racemic form.

In a preferred embodiment of the invention, dimethenamid is the S-type optical isomer, i.e. S-dimethenamid, which is also named dimethenamid-P (DMTA-p).

If the herbicides B as described herein have ionizable functional groups, they can also be employed in the form of their agriculturally acceptable salts. Suitable are, in general, the salts of those cations and the acid addition salts of those acids whose cations and anions, respectively, have no adverse effect on the activity of the active compounds.

If the herbicides B as described herein have a carboxyl group, they can be employed in the form of the acid, in the form of an agriculturally suitable salt as mentioned above or else in the form of an agriculturally acceptable derivative, for example as amides, such as mono- and di-C₁-C₆-alkylamides or arylamides, as esters, for example as allyl esters, propargyl esters, C₁-C₁₀-alkyl esters, alkoxyalkyl esters, tefuryl ((tetrahydrofuran-2-yl)methyl) esters and also as thioesters, for example as C₁-C₁₀-alkylthio esters.

Examples for the optional herbicide B, which can be used in combination with herbicide A according to the present invention are preferably: saflufenacil, saflufenacil sodium, saflufenacil potassium; trifludimoxazin; glyphosate, glyphosate-ammonium, glyphosate-dimethylammonium, glyphosate-isopropylammonium, glyphosate-trimesium (sulfosate), glyphosate-potassium; glufosinate as free acid, glufosinate-ammonium, glufosinate-sodium, glufosinate-potassium, glufosinate-P as free acid, glufosinate-P-ammonium, glufosinate-P-sodium and glufosinate-P-potassium; 2,4-D as free acid, 2,4-D-isobutyl-ester, 2,4-D-ethylhexyl-ester, 2,4-D-dimethylammonium and 2,4-D choline; pyroxasulfone; imazethapyr, imazethapyr-ammonium, imazethapyr-isopropylammonium; dimethenamid, dimethenamid-P (DMTA-p); mesotrione; topramezone and topramezone-sodium, isoxaflutole; acetochlor; clethodim; diclosulam; 3,6-dicyclopropylisoxazolo[5,4-b]pyridine-4-carboxylic acid, 3,6-dicyclopropylisoxazolo[5,4-b]pyridine-4-carboxylic acid sodium salt, 3,6-dicyclopropylisoxazolo[5,4-b]pyridine-4-carboxylic acid potassium salt, and 3,6-dicyclopropylisoxazolo[5,4-b]pyridine-4-carboxylic acid ammonium salt.

Preferred optional herbicides B including respective salts and derivatives that can be used in the present method and compositions are:

**Table B**

| # | Herbicide B |
|---|---|
| B-1 | saflufenacil |
| B-2 | saflufenacil sodium |
| B-3 | saflufenacil potassium |
| B-4 | trifludimoxazin |
| B-5 | glyphosate |
| B-6 | glyphosate-ammonium |
| B-7 | glyphosate-dimethylammonium |
| B-8 | glyphosate-isopropylammonium |
| B-9 | glyphosate-trimesium (sulfosate) |
| B-10 | glyphosate-potassium |
| B-11 | glufosinate-ammonium |
| B-12 | qlufosinate-P-ammonium |
| B-13 | qlufosinate-P-sodium |
| B-14 | 2,4-D as free acid |
| B-15 | 2,4-D-isobutyl-ester |
| B-16 | 2,4-D-ethylhexyl-ester |
| B-17 | 2,4-D-dimethylammonium |
| B-18 | 2,4-D choline |
| B-19 | pyroxasulfone |
| B-20 | imazethapyr |
| B-21 | imazethapyr-ammonium |
| B-22 | imazethapyr-isopropylammonium |
| B-23 | dimethenamid-p (DMTA-p) |
| B-24 | mesotrione |
| B-25 | topramezone |
| B-26 | topramezone-sodium |
| B-27 | isoxaflutole |
| B-28 | acetochlor |
| B-29 | clethodim |
| B-30 | diclosulam |
| B-31 | 3,6-dicyclopropylisoxazolo[5,4-b]pyridine-4-carboxylic acid |

In the present method the required application rate of optional herbicide B without formulation auxiliaries, depends on the kind of effect desired, the density of the undesired vegetation, on the development stage of the unwanted plants, on the climatic conditions of the location where the composition is used, and on the application method.

The application rates of the optional herbicide B mentioned herein refer to the respective acid equivalent of herbicide B, even though a salt of herbicide B is mentioned

In general, the application rate of saflufenacil is
from 100 g/ha to 5 g/ha,
preferably from 75 to 9 g/ha,
more preferably from 50 to 18 g/ha,
especially preferably from 37.5 to 25 g/ha;
of active substance.

In general, the application rate of trifludimoxazin is
from 50 g/ha to 5 g/ha,
preferably from 25 g/ha to 5 g/ha,
more preferably from 25 g/ha to 12.5 g/ha,
of active substance.

In general, the application rate of glyphosate is
from 1500 g/ha to 800 g/ha,
preferably from 1300 to 800 g/ha,
more preferably from 1260 g/ha to 840 g/ha
particularly preferred 1260 g/ha,
of active substance.

In general, the application rate of glufosinate-P-ammonium is
from 100 g/ha to 600 g/ha,
preferably from 150 to 500 g/ha,
more preferably from 180 to 440 g/ha,
particularly preferred 370 g/ha,
of active substance.

In general, the application rate of 2,4-D is
from 800 g/ha to 1200 g/ha,
preferably from 900 to 1120 g/ha,
more preferably 1066 g/ha
of active substance.

In general, the application rate of pyroxasulfone is
from 40 g/ha to 210 g/ha,
preferably from 50 to 160 g/ha,
more preferably from 90 to 120 g/ha,
of active substance.

In general, the application rate of imazethapyr-ammonium is
from 75 g/ha to 125 g/ha,
preferably from 75 to 100 g/ha,
more preferably 100 g/ha
of active substance.

In another embodiment of the invention, the application rate of DMTA-p is
from 500 g/ha to 900 g/ha,
preferably from 580 to 840 g/ha,
more preferably 630 g/ha
of active substance.

In the present method, the weight ratio of an application rate of herbicide A to an application rate of at least one herbicide B is within a range of 50:1 to 1:50.

In another embodiment of the present method, the weight ratio of herbicide A to at
least one herbicide B is
usually within a range of 10:1 to 1:500,
preferably 2:1 to 1:100, and
more preferably 1:1 to 1:50.

Examples of preferable mixing ratios by weight of herbicide A to at least one herbicide B include about 1:0.1, 1:0.2, 1:0.3, 1:0.4, 1:0.5, 1:0.6, 1:0.7, 1:0.8, 1:1, 1:1.2, 1:1.4, 1:1.5, 1:1.6, 1:1.8, 1:2, 1:2.2, 1:2.4, 1:2.5, 1:2.6, 1:2.8, 1:3, 1:4, 1:5, 1:7, 1:10, 1:15, 1:20, 1:25, 1:30, 1:40, 1:50, 1:60, 1:70,1:80, 1:90, 1:100, 1:125, 1:150, 1:200, 1:250, 1:300 and 1:400.

"About" as used herein includes a range of a ratio increased or decreased by 10% by weight compared to the specified ratio. For example, about 1:2 includes a range of 1:1.8 to 1:2.2.

In the present method, examples of particularly preferable compositions comprising herbicide A and at least one herbicide B, and a range of the respective weight ratio are mentioned below, but are not limited thereto:
composition of herbicide A and saflufenacil in a ratio of 10:1 to 1:20, preferably 1: 1 or 1: 2;
composition of herbicide A and trifludimoxazin in a ratio of 10:1 to 1:20, preferably 1: 1;
composition of herbicide A and glyphosate, preferably glyphosate-potassium, in a ratio of 1:15 to 1:100, preferably 1: 50;
composition of herbicide A and glufosinate-P, preferably glufosinate-P-ammonium, in a ratio of 1:3 to 1:35, preferably 1: 15;
composition of herbicide A and 2,4-D, preferably 2,4-D choline, in a ratio of 1:20 to 1:85; preferably 1:43;
composition of herbicide A and pyroxasulfone in a ratio of 1:1 to 1:10, preferably 1: 4;
composition of herbicide A and imazethapyr, preferably imazethapyr ammonium, in a ratio of 1:1 to 1:8, preferably 1: 3;
composition of herbicide A and dimethenamid-p, in a ratio of 1:10 to 1:75, preferably 1: 25.

Target weed species controlled in the present method include the followings as
examples, however they are not limited thereto.

Broadleaf weeds like Lambsquarters (Chenopodium album), Kochia (Kochia scoparia), Redroot pigweed (Amaranthus retroflexus), smooth pigweed (Amaranthus hybridus), Palmer amaranth (Amaranthus palmeri), Waterhemp (Amaranthus tuberculatus = Amaranthus rudis = Amaranthus tamariscinus ), Amaranthus quitensis, Commeline (e.g. Commelina benghalensis), Wild poinsettia (Euphorbia heterophylla), hairy fleabane (Conyza bonariensis), Conyza sumatrensis, marestail (Conyza Canadensis), common ragweed (Ambrosia artemisiifolia), jointed charlock (Raphanus raphanistrum), and giant ragweed (Ambrosia trifida).

Grass weeds (Poaceae) like Brachiaria species (e.g. Brachiaria decumbens), barnyardgrass (Echinochloa crus-galli), junglerice (Echinochloa colona), green foxtail (Setaria viridis), giant foxtail (Setaria faberi), large crabgrass (Digitaria sanguinalis), Jamaican crabgrass (Digitaria horizontalis), Digit31-ia insularis, Goosegrass (Eleusine indica), Johnsongrass (Sorghum halepense), Italian ryegrass (Lolium multiflorum), perennial ryegrass (Lolium perenne), and rigid ryegrass (Lolium rigidum).

The method according to the invention has an outstanding herbicidal activity against undesired vegetation, i.e. against a large variety of unwanted plants, including monocotyledonous weeds and dicotyledonous weeds and comprising also volunteer crop plants as defined above.

The method according to the invention is useful for controlling a large variety of unwanted plants (undesired vegetation), in particular for controlling weeds, which are selected from the genera Abutilon, Ageratum, Alisma, Alopecurus, Amaranthus, Ambrosia, Ammania, Ammi, Amsinckia, Andropogon, Aneilema, Anthemis, Apera, Atriplex, Avena, Axonopis, Barbarea, Bidens, Borreria, Brachiaria, Brassica, Bromus, Bunias, Butomus, Calandrinia, Capsella, Cardamine, Cenchrus, Centaurea, Chenopodium, Cirsium, Conium, Convolvolus, Conyza, Coronopus, Cyclospermum, Cyperus, Datura, Daucus, Descurainia, Digitaria, Echinochloa, Eleusine, Epilobium, Epimedium, Eragrostis, Erigeron, Eriochloa, Erodium, Euphorbia, Fumaria, Galinsoga, Galium, Geranium, Gnaphalium, Helianthus, Heliotropium, Heteranthera, Hibiscus, Hordeum, Hypochaeris, Ipomoea, Kochia, Lactuca, Lamium, Leersia, Leptochloa, Lolium, Lycopsis, Malva, Marchantia, Matricaria, Mediago, Melinus, Mercurialis, Mollugo, Oenothera, Orobanche, Oryza, Oxalis, Panicum, Papaver, Pennisetum, Picris, Plantago, Poa, Polygonum, Portulaca, Raphanus, Ricardia, Salsola, Scirpus, Senecio, Sesbania, Setaria, Sida, Sinapis, Sisymbrium, Solanum, Sonchus, Sorghum, Stachys, Stellaria, Taraxacum, Thlaspi, Tribulus, Trifolium, Triticum, Urtica, Veronica, Vicia, Viola, and Xanthium.

Mentioned below are some representatives of monocotyledonous and dicotyledonous weeds, which can be controlled by the compositions according to the invention without the enumeration being a restriction to certain species.

Preferably the compositions and methods according to the invention are used to control monocotyledonous weeds.

Examples of monocotyledonous weeds on which the compositions and methods according to the invention act efficiently are selected from the genera Alopecurus spp., Avena spp., Brachiaria spp., Bromus spp., Cenchrus spp., Chloris spp., Commelina spp., Cyperus spp., Digitaria spp., Echinochloa spp., Eleusine spp., Eragrostis spp., Eriochloa spp., Hordeum spp., Leptochloa spp., Lolium spp., Panicum spp., Pennisetum spp., Poa spp., Setaria spp., and Sorghum spp..

Preferred examples of monocotyledonous weeds on which the compositions and methods according to the invention act efficiently are selected from the genera Alopecurus ssp., Avena spp., Brachiaria spp., Chenchrus ssp., Commelina ssp., Cyperus spp., Digitaria spp., Echinochloa spp., Eleusine ssp., Hordeum spp., Lolium ssp., Panicum ssp., Setaria spp. and Sorghum spp..

Preferred examples of monocotyledonous weeds on which the compositions and methods according to the invention act efficiently are selected from the species Alopecurus myosuroides, Avena fatua, Avena sativa, Avena sterilis, Brachiaria decumbens, Brachiaria plantaginea, Brachiaria platyphylla, Bromus diandrus, Bromus rigidus, Bromus rubens L., Bromus secalinus, Bromus sterilis, Cenchrus echinatus, Chloris virgata, Commelina benghalensis, Cynodon dactylon, Cyperus compressus, Cyperus esculentes, Cyperus iria, Cyperus kylingia, Cyperus rotundus, Digitaria horizontalis, Digitaria insularis, Digitaria ischaemum, Digitaria sanguinalis, Echinochloa colonum, Echinochloa crus-galli, Eleusine indica, Eragrostis pectinacea, Eriochloa gracilis, Leptochloa fusca, Lolium multiflorum, Lolium perenne, Lolium rigidum, Ottochloa nodosa, Panicum maximum, Panicum miliaceum, Pennisetum glaucum, Poa annua, Setaria faberi, Setaria italica, Setaria lutescens, Setaria palmifolia, Setaria verticillata, Setaria viridis, Sorghum halepense, Sorghum vulgare and Urochloa paricoides.

Especially preferred examples of monocotyledonous weeds on which the compositions and methods according to the invention act efficiently are selected from the species Avena spp., Brachiaria spp., Bromus spp., Commelina spp., Digitaria spp., Echinochloa spp., Eleusine spp., Lolium spp., Setaria spp. and Sorghum spp.

Also especially preferred examples of monocotyledonous weeds on which the compositions and methods according to the invention act efficiently are selected from Alopecurus myosuroides, Avena fatua, Brachiaria decumbens, Brachiaria plantaginea, Chenchrus echinatus, Commelina benghalensis, Cyperus esculentus, Cyperus iria, Digitaria horizontalis, Digitaria insularis, Digitaria sanguinalis, Echinichloa colonum, Echinochloa crus-galli, Eleusine indica, Hordeum vulgare, Lolium multiflorum, Panicum dichotomiflorum, Panicum maximum, Setaria faberi, Setaria viridis and Sorghum vulgare.

More preferably the compositions and methods according to the invention are used to control commelinids. In plant taxonomy, "commelinids" (originally commelinoids) are a clade of flowering plants within the monocotyledons (commonly referred to as "monocots").

Particularly preferred the compositions and methods according to the invention are used to control unwanted plants selected from the families of Commelinaceae, Cyperaceae and Poaceae.

According to another embodiment, the compositions and methods of the present invention are suitable for controlling monocotyledonous weeds, which are selected from the family Commelinaceae.

Examples for Commelinaceae are Commelina benghalensis, Commelina communis, Commelina diffusa, Commelina latifolia and Commelina virginica.

Preferably the compositions and methods according to the invention are used to control Commelinaceae selected from Commelina benghalensis and Commelina latifolia.

According to another embodiment, the compositions and methods of the present invention are suitable for controlling monocotyledonous weeds, which are selected from the family Cyperaceae.

Examples for Cyperaceae are Cyperus compressus, Cyperus difformis, Cyperus esculentes, Cyperus ferax, Cyperus iria, Cyperuls kylingia, Cyperus malaccensis, Cyperus rotundus and Cyperus serotinus.

Preferably the compositions and methods according to the invention are used to control Cyperaceae selected from Cyperus esculentes, Cyperus iria, Cyperuls kylingia, and Cyperus rotundus.

According to another embodiment, the compositions and methods of the present invention are suitable for controlling monocotyledonous weeds, which are selected from the family Poaceae (Gramineae), commonly known as grasses.

Examples for Poaceae are Avena fatua, Avena sativa, Avena sterilis, Brachiaria decumbens, Brachiaria plantaginea, Brachiaria platyphylla, Bromus diandrus, Bromus rigidus, Bromus rubens, Bromus secalinus, Bromus sterilis, Cenchrus echinatus, Digitaria horizontalis, Digitaria insularis, Digitaria ischaemum, Digitaria sanguinalis, Echinochloa crus-galli, Echinochloa colonum, Eleusine indica, Eragrostis pectinacea, Eriochloa gracilis, Leptochloa fusca, Lolium multiflorum, Lolium perenne, Lolium rigidum, Panicum miliaceum, Panicum maximum, Pennisetum glaucum, Poa annua, Setaria faberi, Setaria italica, Setaria lutescens, Setaria verticillata, Setaria viridis, Sorghum vulgare and Sorghum halepense.

Preferably the compositions and methods according to the invention are used to control Poaceae selected from Avena fatua, Avena sativa, Avena sterilis, Brachiaria decumbens, Brachiaria plantaginea, Brachiaria platyphylla, Bromus rigidus, Bromus secalinus, Digitaria horizontalis, Digitaria insularis, Digitaria ischaemum, Digitaria sanguinalis, Echinochloa crus-galli, Echinochloa colonum, Eleusine indica, Lolium multiflorum, Lolium perenne, Lolium rigidum, Setaria faberi, Setaria italica, Setaria lutescens, Setaria verticillate and Setaria viridis.

Preferred examples of commelinids, on which the compositions and methods according to the invention act efficiently, are selected from the genera Avena spp., Brachiaria spp., Commelina ssp., Cyperus spp., Digitaria spp., Echinochloa spp., Eleusine ssp., Lolium ssp., Setaria spp. and Sorghum spp..

Preferred examples of Commelinaceae, Cyperaceae and Poaceae, on which the compositions and methods according to the invention act efficiently, are selected from Avena spp., Brachiaria spp, Commelina spp., Digitaria spp., Echinochloa spp., Eleusine spp., Lolium spp. and Setaria spp..

According to another embodiment, the compositions and methods according to the invention are used to control dicotyledonous weeds, commonly known as broadleaf weeds.

Examples of dicotyledonous weeds on which the compositions and methods according to the invention act efficiently are selected from the genera Abutilon spp., Ageratum spp., Alternathera spp., Amaranthus spp., Ambrosia spp., Amsinckia spp., Andropogon spp., Asystasia spp, Axonopus spp, Bidens spp., Borreria spp. (Spermacoce spp.), Brassica spp., Calandrinia spp., Capsella spp., Cardamine spp., Cenchrus spp., Chenopodium spp., Cirsium spp., Cleome spp., Conyza spp., Coronopus spp., Cyclospermum spp., Datura spp., Epilobium spp., Epimedium spp., Eragrostis spp., Erigeron spp., Erodium spp., Euphorbia spp., Galinsoga spp., Galium spp., Gnaphalium spp., Helianthus spp., Hypochaeris spp., Ipomoea spp., Kochia spp., Lactuca spp., Lamium spp., Malva spp., Marchantia spp., Matricaria spp., Medicago spp., Mollugo spp., Mucuna spp, ., Nicotiana spp., Oenothera spp., Oxalis spp., Paspalum spp., Phylanthus spp, Picris spp., Plantago spp., Polygonum spp., Portulaca spp., Raphanus spp., Richardia spp., Salsola spp., Senecio spp., Sesbania spp., Sida spp, Sinapis spp., Sisymbrium spp., Solanum spp., Sonchus spp., Spermacoce ssp., Stellaria spp., Stenochlaena spp., Taraxacum spp., Tribulus spp., Trifolium spp., Urtica spp., Veronica spp. and Vicia spp..

Preferred examples of dicotyledonous weeds on which the compositions and methods according to the invention act efficiently are selected from the genera Abutilon ssp., Amaranthus spp., Bidens ssp., Chenopodium ssp., Erigeron spp., Euphorbia ssp., Galinsoga ssp., Ipomoea spp., Kochia spp., Portulaca ssp., and Spermacoce spp..

Preferred examples of dicotyledonous weeds on which the compositions and methods according to the invention act efficiently are selected from the species Abutilon theophrasti, Ageratum conycoides, Ambrosia artemisiifolia, Ambrosia elatior, Andropogon bicornis, Amaranthus blitoides, Amaranthus chlorostachys, Amaranthus cruentus, Amaranthus hybridus, Amaranthus lividus, Amaranthus palmeri, Amaranthus rudis, Amaranthus retroflexus, Amaranthus spinosus, Amaranthus tamariscina, Amaranthus tuberculatos, Amaranthus viridis, Bidens bipinnata, Bidens pilosa, Borreria latifolia (Spermacoce latifolia), Borreria verticilata (Spermacoce verticilata), Brassica nigra, Brassica rapa, Brassica napus, Capsella bursa-pastoris, Chenopodium album, Circium arvense, Epimedium spp., Erigeron bonariensis (Conyza bonariensis), Erigeron canadensis, Euphorbia heterophylla, Euphorbia maculate, Galium aparine, Galium spurium, Galinsoga parviflora, Helianthus annuus, Ipomoea grandifolia, Ipomoea hederacea, Ipomoea lacunosa, Ipomoea triloba, Kochia scoparia, Lactuca serriola, Lamium amplexicaule, Malva parviflora, Malva neglecta, Marchantia spp., Matricaria matriccarioides, Oxalis spp., , Plantago spp., Polygonum aviculare, Polygonum convolvulus, Portulaca oleracea, Raphanus raphanistrum, Richardia scabra, Senecio vulgaris, Sesbania exaltata, Sida spinosa, Sinapis arvensis, Solanum spp., Sonchus oleraceus, Spermacoce latifolia, Stellaria media, Trifolium spp., Veronica spp. and Vicia benghalensis.

Especially preferred examples of dicotyledonous weeds on which the compositions and methods according to the invention act efficiently are selected from the species Abutilon spp., Amaranthus spp., Ambrosia spp., Bidens spp., Borreria spp. (Spermacoce spp.), Chenopodium spp., Conyza spp., Erigeron spp., Euphorbia spp., Galium spp., Ipomoea spp., Kochia spp., Polygonum spp., Portulaca spp. and Raphanus spp..

Most preferred examples of dicotyledonous weeds on which the compositions and methods according to the invention act efficiently are selected from Amaranthus spp., Ambrosia spp., Borreria spp. (Spermacoce spp.), Chenopodium spp., Conyza spp., Erigeron spp., Galium spp., Ipomoea spp. and Kochia spp..

Furthermore, the method according to the invention is also suitable for control, preferably post-emergent control, of PPOi resistant, glyphosate resistant, glufosinate resistant, 2,4-D resistant, VLCFAi resistant, HPPDi resistant, ACCase-i resistant and/or ALS resistant weeds, in a cultivation area of field corn.

As used herein, the terms "PPO-i" and "PPO-i's" respectively stand for "PPO inhibitor(s)", "PPO inhibitor herbicide(s)", "PPO-inhibiting herbicide(s)", and refer to herbicides that inhibit the enzyme protoporphyrinogen IX oxidase of a plant.

As used herein, the terms "VLCFAi (s)" and "VLCFA-i(s)" stands for "VLCFA inhibitor(s)", "VLCFA inhibitor herbicide(s)", "VLCFA-inhibiting herbicide(s)", and refers to herbicides that inhibit the synthesis of very long chain fatty acids.

As used herein, the term "ALS" and "ALS-i(s)" stands for "ALS-inhibitor(s)" and refers to herbicides that inhibit the acetolactate synthase.

As used herein, the terms "HPPDi(s)" and "HPPD-i(s)" stands for "HPPD inhibitor(s)", "HPPD inhibitor herbicide(s)", "HPPD-inhibiting herbicide(s)", and refers to herbicides that inhibit the 4-hydroxyphenylpyruvate-dioxygenase.

As used herein, the term "ACCase" and "ACCase-i(s)" stands for "ACCase-inhibitor(s)" and refers to herbicides that inhibit the acetyl coenzyme A carboxylase.

As used herein, the term "resistant weed(s)" refers to a plant that, in relation to a treatment with an appropriate or over-appropriate rate of herbicidal application, has inherited, developed or acquired an ability
(1) to survive that treatment, if it is one that is lethal to (i.e. eradicates) the wild type weed; or
(2) to exhibit significant vegetative growth or thrive after that treatment, if it is one that suppresses growth of the wild-type weed.

Herbicide resistant weeds present a serious problem for efficient weed control because such resistant weeds are increasingly widespread and thus weed control by the application of herbicides is no longer effective. In particular PPO-i and/or glyphosate resistant weeds are a huge problem to farmers.

According to another embodiment, the methods and compositions of the present invention are suitable for controlling undesired vegetation, wherein the undesired vegetation comprises volunteer crop plants selected from soy and cotton.

Volunteer crop plants are crop plants that volunteer in planted crops. They (the volunteer crops) are considered weeds, which compete with the planted crop for moisture, nutrients, and light.

In the methods of the present invention, volunteer crop plants selected from soy and cotton are preferably crop plants selected from soy and cotton expressing a protoporphyrinogen oxidase enzyme (PPO), which PPO had not been rendered herbicide-tolerant (or -resistant) by mutagenesis or recombinant genetic engineering techniques as described herein.

According to a further preferred embodiment, the compositions and methods of the present invention are suitable for controlling undesired vegetation, wherein the undesired vegetation comprises volunteer crop plants selected from the genera Glycine and Gossypium;
in particular from the species Glycine max (GLXMA) and Gossypium hirsutum (GOSHI).

Preferably the methods and compositions according to the invention are used for post-emergent weed control including respective volunteer crop plants selected from soy and cotton;
i.e. preferably herbicide A and optionally at least one herbicide B is applied after the emergence of the weeds including respective volunteer crop plants selected from soy and cotton.

The invention also relates to agrochemical compositions (formulations) comprising an auxiliary, herbicide A and optionally at least one herbicide B according to the invention.

In the present method, herbicide A is usually used after preparing an agrochemical composition by mixing herbicide A with a carrier such as a solid or liquid carrier and adding auxiliary agents for formulations such as a surfactant as necessary.

In the agrochemical compositions the active ingredients and optional further actives are present in suspended, emulsified or dissolved form. The agrochemical compositions can be in the form of aqueous solutions, powders, suspensions, also highly concentrated aqueous, oily or other suspensions or dispersions, aqueous emulsions, aqueous microemulsions, aqueous suspo-emulsions, oil dispersions, pastes, dusts, materials for spreading or granules.

The herbicide A and optionally at least one herbicide B, their salts or derivatives can be converted into customary types of agrochemical compositions, e. g. solutions, emulsions, suspensions, dusts, powders, pastes, granules, pressings, capsules, and mixtures thereof. Examples for agrochemical composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further agrochemical composition types are defined in the "Catalogue of pesticide formulation types and international coding system", Technical Monograph No. 2, 6th Ed. May 2008, CropLife International.

Preferable formulation type is a soluble liquid, soluble granule, an aqueous suspension concentrate, oil-based liquid suspension, wettable powder, water dispersible granule, granule, aqueous emulsion, oil-based emulsion, and emulsifiable concentrate.

More preferable formulation type is aqueous suspension concentrate.

The agrochemical compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

An agrochemical composition containing herbicide A as only active ingredient may be independently used or may be tank-mixed with an agrochemical composition containing at least one herbicide B as active ingredient.

Also, an agrochemical composition containing herbicide A and at least one herbicide B may be used.

Also, an agrochemical composition containing herbicide A and optionally at least one herbicide B as active ingredients may be tank-mixed with an agrochemical composition containing, as active ingredients, herbicides different from the above herbicides.

The content of the active ingredients (herbicide A or a total of herbicide A and at least one herbicide B or other herbicides) in the agrochemical composition is usually within a range of 0.01 to 90 % by weight, preferably 1 to 80 % by weight, especially preferably 2 to 75% by weight.

The method according to the invention can be applied in conventional manner by using techniques a skilled person is familiar with. Suitable techniques include spraying, atomizing, dusting, spreading or watering. The type of application depends on the intended purpose in a well-known manner; in any case, it should ensure the finest possible distribution of the active ingredients.

The application is usually conducted using a spray dilution produced by mixing an agrochemical composition containing herbicide A and optionally at least one herbicide B with water.

The method according to the invention are applied to the weeds mainly by spraying the leaves. Here, the application can be carried out using, for example, water as carrier by customary spraying techniques using spray liquor amounts of from about 10 to 1000 I/ha, preferably 20 to 500 I/ha, and more preferably 50 to 300 I/ha, and for example from 50 to 200 I/ha of cultivation area of field corn though no particular limitation is imposed on it.

Although a period of time for conducting the present method is not particularly limited, the period of time is usually within a range from 5 a.m. to 9 p.m., and the photon flux density at land surface of the place where the present method is conducted is usually 10 to 2500 µmol/m2/s.

The spray pressure when conducting the present method is usually 30 to 120 PSI and preferably 40 to 80 PSI though no particular limitation is imposed on it. Here, the spray pressure is a set value just before the dilution is introduced into the nozzle.

The nozzle used in the present method may be flat-fan nozzles or drift-reducing nozzles. Examples of flat-fan nozzles include Teejetl 10 series and XR Teejetl 10 series manufactured by Teejet Company. When using these nozzles, the spray pressure is generally 30 to 120 PSI and the volume median diameter of liquid droplets discharged from the nozzle is usually less than 430 micro meter. The drift-reducing nozzle is a nozzle which leads to less drift compared with a flat-fan nozzle and which is called an air induction nozzle or pre-orifice nozzle. The volume median diameter of a liquid droplet discharged from the drift-reducing nozzle is usually 430 micro meter or more.

The method of the present invention may also be applied by the low-volume or the ultra-low-volume method, or in the form of microgranules.

In the method of the present invention, herbicide A and at least one herbicide B can be formulated and applied jointly or separately, during or after the emergence of the unwanted plants.

In case of separate application, the order of the application of herbicide A and at least one herbicide B is of minor importance. The only thing important is that herbicide A and at least one herbicide B are present simultaneously at the site of action.

In a preferred embodiment of the method of the present invention, herbicide A and at least one herbicide B are applied jointly.

In another preferred embodiment of the method of the present invention, herbicide A and at least one herbicide B are formulated and applied jointly.

In another preferred embodiment of the method of the present invention, herbicide A and at least one herbicide C are each formulated separately but applied jointly.

In another preferred embodiment of the method of the present invention, herbicide A and at least one herbicide B are applied separately.

In the present method, seeds of field corn may be treated with one or more compounds selected from the group consisting of insecticidal compounds, nematicidal compounds, fungicidal compounds, and plant growth regulators. Examples of compounds to be used for the seed treatment include neonicotinoid compounds, diamide compounds,

carbamate compounds, organophosphorous compounds, biological nematicidal compounds, other insecticidal compounds and nematicidal compounds, azole compounds, strobilurin compounds, metalaxyl compounds, SDHI compounds, other fungicidal compounds, and plant growth regulators.

In the present method, seeds of field corn are seeded to the cultivation area by usual methods.

The present method may be conducted before seeding, concurrently with and/or after seeding.

When the present method is conducted before seeding, the present method is conducted usually from 50 days before seeding to immediately before seeding, preferably from 30 days before seeding to immediately before seeding, more preferably from 20 days before seeding to immediately before seeding, and still preferably from 10 days before seeding to immediately before seeding.

When the present method is conducted concurrently with seeding, the present method is conducted by integration of a sowing machine and a spraying machine with each other.

When the present method is conducted after seeding, the present method is conducted usually from immediately after seeding to before flowering,
preferably from immediately after seeding to emergence, but not later than 1 to 8 true leaf stage of field corn.
preferably immediately after seeding to before emergence.

Examples of the number of times that the present method is conducted include 1 to 3 times during the cultivation of field com.

In the case of once, the present method may be conducted once before, concurrently with, or after seeding.

In the case of twice, the present method may be conducted twice except before seeding, twice except concurrently with seeding, or twice except after seeding.

In the case of three times, the present method may be conducted three times before, concurrently with, and after seeding.

In the present method, "applying in a cultivation area of field corn" includes
- applying herbicide A and optionally at least one herbicide B to the soil of a cultivation area of field corn;
- applying herbicide A and optionally at least one herbicide B prior to seeding (planting) or after seeding (planting) of the field corn, but before the emergence of the field corn, in the cultivation area of field corn;
- applying herbicide A and optionally at least one herbicide B pre-plant, pre-emergent, at-emergent (i.e. at emergence at needle point or spiking) and/or post-emergent of the field corn in the cultivation area of field corn,
   ∘ preferably applying herbicide A and optionally at least one herbicide B preplant to the field corn in the cultivation area of field corn,
   ∘ also preferably applying herbicide A and optionally at least one herbicide B pre-emergent to the field corn in the cultivation area of field corn;
- applying herbicide A and optionally at least one herbicide B pre-emergent, at-emergent (i.e. at emergence at needle point or spiking) and/or post-emergent to weeds growing in the cultivation area of field corn,
   o preferably applying herbicide A and optionally at least one herbicide B at-emergent (i.e. at emergence at needle point or spiking) and/or post-emergent to weeds (i.e. post-emergent weed control) growing in the cultivation area of field corn,
      ▪ more preferably applying herbicide A and optionally at least one herbicide B at-emergent (i.e. at emergence at needle point or spiking) to weeds growing in the cultivation area of field corn,
      ▪ also more preferably applying herbicide A and optionally at least one herbicide B post-emergent to weeds growing in the cultivation area of field corn.

The method according to the present invention can be applied before, during and/or after, preferably after the emergence of the weeds.

It is particularly advantageous to apply the method according to the invention to weeds growing in the cultivation area of field corn, i.e. in a cultivation area of field corn, where weeds are growing, preferably post-emergent when the undesired plant starts emerging from the ground up to flowering.

The method of the present invention can generally be applied to weeds at any growth with good results.

The method of the present invention can generally be applied to weeds, which are several cm tall,
for example, the weeds can be between 1 and 80 cm tall;
preferably the weeds are between 2 and 60 cm tall;
more preferred the weeds are between 3 and 30 cm tall.

In one embodiment, the method comprises applying herbicide A and optionally at least one herbicide B to weeds, which are more than 1 cm tall.

In one embodiment, the method comprises applying herbicide A and optionally at least one herbicide B to weeds, which are more than 2 cm tall.

In one embodiment, the method comprises applying herbicide A and optionally at least one herbicide B to weeds, which are more than 3 cm tall.

In one embodiment, the method comprises applying herbicide A and optionally at least one herbicide B to weeds, which are more than 5 cm tall.

In one embodiment, the method comprises applying herbicide A and optionally at least one herbicide B to weeds, which are more than 8 cm tall.

As an alternative and commonly known, the growth of plants can also be defined by the respective growth stage (GS) according to BBCH (Biologische Bundesanstalt für Land- und Forstwirtschaft, Bundessortenamt und CHemische Industrie), see e.g. U. Meier, Growth stages of mono- and dicotyledonous plants, January 2001.

The method of the present invention can generally be applied to weeds, which are in the following growth stages (GS):
for example the weeds can be between GS11 and GS69;
preferably the weeds are between GS12 and GS61;
more preferred the weeds are between GS12 and GS39.
particularly preferred the weeds are between GS13 and GS34.

The methods of the invention may be applied in combination with, or by utilizing smart agricultural technologies, such as precision agriculture, remote and proximate imaging and image recognition, or smart agricultural site management programs. These smart agricultural technologies typically include models, e.g. computer programs, that support the user by considering information from a wide variety of sources to increase the quality and yield of harvested material, reduce damage by pests including the prediction of pest pressure and smart application of crop protection products, secure environmental protection, support quick and reliable agronomic decision making, reduce usage of fertilizers and crop protection products, reduce product residues in consumables increase spatial and temporal precision of agronomical measures, automate processes, and enable traceability of measures.

Commercially available systems which include agronomic models are e.g. FieldScripts^{™} from The Climate Corporation, Xarvio^{™} from BASF, AGLogic^{™} from John Deere, etc.

Information input for these models include but is not limited to soil data (e.g. pH, organic matter content, moisture level, nutrient content such as nitrogen, potassium, phosphorous and micro-nutrient content); information on the plants that are currently growing or that may grow at the area of interest including crop plants and/or weeds (e.g. type of plant, chlorophyl levels, biomass, growth stage, plant health, plant water status, plant growth models, genetic traits, biotic damage by infestation or infection with pests, abiotic damage as caused by drought or nutrient stress etc.); weather information (e.g. information on past and present, and forecast of future temperature, humidity, and /or precipitation); information on the location of the area and directly derivable information thereof (e.g. terrain features like altitude, slope, water bodies, sun exposure and hours of sunshine per day, vegetation period, etc.); information on pest pressure (e.g. information of the past or present occurrence of unwanted vegetation, fungal diseases and invertebrate pests at the area of interest, at neighboring areas, the region, or the vegetation zone); information on beneficial organisms (e.g. information of the past or present occurrence of beneficial organisms at the area of interest, at neighboring areas, the region, or the vegetation zone); and / or historic information of any of the aforementioned (e.g. information on previous seasons, or of an earlier point in time of the same season).

The information usable for precision agriculture may be based on input by at least one user, be accessible from external data sources and databases, or be based on sensor data. Data sources typically include proximate-detection systems like soil-borne sensors and remote sensing as may be achieved by imaging with unmanned airborne vehicles like drones, or satellites. Imaging technologies includes poly- and multispectral imagery in the UV-VIS, NIR and UV spectrum. Sensors may be included in an Internet-of-Things system and may be directly or indirectly connected to the processing unit, e.g. via a wireless network and/or cloud applications. The information is typically considered by at least one processing unit and used to provide recommendations, generate control signals (e.g. for the control of agricultural machinery like tractors, drones, irrigation systems, farm management systems and the like), and/or generate (digital) maps on the area of interest. These (digital) maps contain spatially and optionally temporally resolved information of the agricultural site, wherein the information may contain information directly gathered as described above, combinations thereof or derived thereof, such as pest pressure, nutrient levels, and the like. The recommendations, control signals and (digital) maps may relate to or be used for controlling the application of water, nutrients, agrochemical products, or plant propagation material to the field of interest, or for taking other management measures like tilling, physical or laser-induced weeding.

Typical technologies that are used in smart agricultural technologies include self-steering robots (such as tractors, harvesters, drones), artificial intelligence (e.g. machine learning), imaging technologies (e.g. image segmentation technologies), big data analysis, and model generation, cloud computing, and machine-to-machine communication.

Precision agriculture such as precision farming is characterized by spatially and/or temporally resolved, targeted application of active ingredients like pesticides, preferably the compositions according to the present invention, plant-growth-regulators, fertilizers, and/or water including the variation of application rates over the agronomic site, zone or spot application, and of the spatially and/or temporally resolved, targeted planting or seeding of desired plant propagation material to a agronomic site. Precision farming typically includes the use of geo-positioning technologies like GPS for gaining information on the location and boundaries of the area of interest, the utilized application equipment, sensing equipment and recorded data, and to control the actions of farm vehicles such as spraying. By combining geo-positioning data with (digital) maps, it is possible to (semi)-automate agricultural measures at the site of interest, e.g. by using (semi)-autonomous spraying or seeding equipment.

Precision farming may typically include the application of smart spraying equipment, e.g. spot spraying, and precision spraying at a farm, e.g. by irrigation systems, tractors, robots, helicopters, airplanes, unmanned aerial vehicles, such as drones. Such equipment usually includes input sensors (such as e.g. a camera) and a processing unit configured to analyze the input data and configured to provide a recommendation or decision based on the analysis of the input data to apply the compositions of the invention to the agronomic site, e.g. the soil or to control pests in a specific and precise manner.

For example, weeds may be detected, identified, and/or classified from imagery acquired by a camera. Such identification and/ classification can make use of image processing algorithms, which may utilize artificial intelligence (e.g. machine learning algorithms), or decision trees.

In this manner, the compositions and methods described herein can be applied only at the required location, point in time and dose rate.

## Claims

1. A method for controlling weeds in a cultivation area of field corn, which comprises applying ethyl 2-[2-[[3-chloro-5-fluoro-6-[3-methyl-2,6-dioxo-4-(trifluoromethyl)pyrimidin-1-yl]- 2-pyridyl]oxy]phenoxy]acetate (herbicide A) in a cultivation area of field corn.

2. The method according to claim 1, wherein herbicide A is applied before, during and/or after the emergence of the weeds.

3. The method according to claim 1 or 2, wherein the application rate of herbicide A is 5 to 100 g/ha.

4. The method according to any of the preceding claims, wherein herbicide A and additionally at least one herbicide B selected from the group consisting of saflufenacil, trifludimoxazin, glyphosate, glufosinate, 2,4-D, pyroxasulfone, imazethapyr, dimethenamid, mesotrione, topramezone, isoxaflutole, acetochlor, clethodim and diclosulam and 3,6-dicyclopropylisoxazolo[5,4-b]pyridine-4-carboxylic acid including their agriculturally acceptable salts and esters, are applied in a cultivation area of field corn.

5. The method according to any of the preceding claims, wherein herbicide A and at least one herbicide B are applied jointly.

6. The method according to any of the preceding claims, wherein herbicide A and optionally at least one herbicide B are applied in a cultivation area of field corn, where weeds are growing or may grow, wherein such weeds are PPOi resistant, glyphosate resistant, glufosinate resistant, 2,4-D resistant, VLCFAi resistant, HPPDi resistant, ACCase-i resistant and/or ALS resistant weeds.

7. The method according to any of the preceding claims, wherein herbicide A and optionally at least one herbicide B is applied after the emergence of the weeds including respective volunteer crop plants selected from soy and cotton.

8. The method according to any of the preceding claims, wherein the weed is selected from the families of Commelinaceae, Cyperaceae and Poaceae.

9. The method according to any of the preceding claims, wherein herbicide A and optionally at least one herbicide B are applied, when the weed is between 2 and 60 cm tall.

10. The method according to any of the preceding claims, wherein herbicide A and optionally at least one herbicide B are applied prior to seeding (planting) or after seeding (planting) of the field corn, but before the emergence of the field corn, in the cultivation area of field corn.
